# EUROPEAN PATENT SPECIFICATION

(11) **EP 1 779 609 B1**
(45) Date of publication and mention of the grant of the patent: **21.01.2009**
(21) Application number: 05772804.0
(22) Date of filing: 26.07.2005
(51) Int. Cl.: H04L 12/56

(54) **INTEGRATED CIRCUIT AND METHOD FOR PACKET SWITCHING CONTROL**
INTEGRIERTE SCHALTUNG UND VERFAHREN ZUR PAKETVERMITTLUNGSSTEUERUNG
CIRCUIT INTEGRE ET PROCEDE DE COMMANDE DE COMMUTATION PAR PAQUETS

(30) Priority: 12.08.2004 EP 04103881
(43) Date of publication of application: 02.05.2007
(73) Proprietor: Koninklijke Philips Electronics N.V., 5621 BA Eindhoven (NL)
(72) Inventor: DIELISSEN, John, NL-5656 AA Eindhoven (NL)
(74) Representative: Steenbeek, Leonardus Johannes
(86) International application number: PCT/IB2005/052514
(87) International publication number: WO 2006/018753

(56) References cited:
- WO-A-02/095574
- DIELISSEN J ET AL: "Concepts and Implementation of the Philips Network-on-Chip" CONCEPTS, 13 November 2003 (2003-11-13), XP002330547

## Description

The invention relates to an integrated circuit having a plurality of processing modules and an interconnect means for coupling said plurality of processing modules and a method for packet switching control in such an integrated circuit.

The article DIELISSEN J ET AL: "Concepts and Implementation of the Philips Network-on-Chip", CONCEPTS, 13 November 2003, describes the AEthereal network on chip (NoC). The NoC comprises routers and network interfaces. The routers provide data transfer. The network interfaces (NI) have a modular design, composed of kernel and shells. The NI kernel provides the basic functionality, including arbitration between connections, ordering, end-to-end flow control, packetization, and a link protocol with the router.

WO 02/095574 describes a method of reducing the power consumption of a microprocessor system. The microprocessor system comprises a microprocessor and a memory connected by a bus. The memory contains a plurality of data values, each represented by a number of bits, for transmission to the microprocessor via the bus. At least some of said data values contain unused bits. The method includes assigning values to said unused bits in such a way as to reduce the Hamming distance between successive data values by a greater extent than settting all of said unused bits to an arbitrary predetermined value.

Systems on silicon show a continuous increase in complexity due to the ever increasing need for implementing new features and improvements of existing functions. This is enabled by the increasing density with which components can be integrated on an integrated circuit. At the same time the clock speed at which circuits are operated tends to increase too. The higher clock speed in combination with the increased density of components has reduced the area which can operate synchronously within the same clock domain. This has created the need for a modular approach. According to such an approach the processing system, i.e. system-on-chip comprises a plurality of relatively independent, complex modules. In conventional processing systems the systems modules usually communicate to each other via a bus. As the number of modules increases however, this way of communication is no longer practical for the following reasons. On the one hand the large number of modules forms a too high bus load. On the other hand the bus forms a communication bottleneck as it enables only one device to send data to the bus.

A communication network forms an effective way to overcome these disadvantages. Networks on chip (NoC) have received considerable attention recently as a solution to the interconnect problem in highly-complex chips. The reason is twofold. First, NoCs help resolve the electrical problems in new deep-submicron technologies, as they structure and manage global wires. At the same time they share wires, lowering their number and increasing their utilization. NoCs can also be energy efficient and reliable and are scalable compared to buses. Second, NoCs also decouple computation from communication, which is essential in managing the design of billion-transistor chips. NoCs achieve this decoupling because they are traditionally designed using protocol stacks, which provide well-defined interfaces separating communication service usage from service implementation.

Most of these topics have been already the subject of research in the field of local and wide area networks (computer networks) and as an interconnect for parallel machine interconnect networks. Both are very much related to on-chip networks, and some of the results in those fields are also applicable on chip. However, NoC's premises are different from off-chip networks, and, therefore, most of the network design choices must be reevaluated. On-chip networks have different properties (e.g., tighter link synchronization) and constraints (e.g., higher memory cost) leading to different design choices, which ultimately affect the network services.

NoCs differ from off-chip networks mainly in their constraints and synchronization. For on-chip networks computation too comes at a relatively high cost compared to off-chip networks. An off-chip network interface usually contains a dedicated processor to implement the protocol stack up to network layer or even higher, to relieve the host processor from the communication processing. Including a dedicated processor in a network interface is not feasible on chip, as the size of the network interface will become comparable to or larger than the intellectual property blocks IP to be connected to the network. Moreover, running the protocol stack on the IP itself may also be not feasible, because often these IPs have one dedicated function only, and do not have the capabilities to run a network protocol stack.

The communication over the interconnect is based on the data flow in the system-on-chip, i.e. the processor-processor communication and the processor-memory communication. This communication is usually transaction based and can be of the following origins: cache and memory transactions (data fetch from shared memory), cache coherence operations (updated data in a shared memory must be updated in all cache copies resulting in synchronization traffic), packet segmentation overheads (segmenting dataflow into packets will introduce an additional data overhead) or contentions between packets (rerouting packets in case of a contention).

Messages to be sent over an interconnect are usually divided into packets. This packetization is known from off-chip networks like the Internet, LAN etc. However, in these networks the size of the buffer is large and the latency may be high. In contrast to that, within a system on chip low latency and low costs, i.e. low buffer sizes, are required.

Packets comprise at least one of a header, a payload and a tail. Typically, the header contains the destination address, the source address and the requested operation like, READ, WRITE, INVALIDATE etc. The payload of a packet comprises the data to be transported. Optionally, a tail comprises a error checking and a correction code. There may several different data packets present in the above system-on-chip, namely for memory access requests, for cache coherence synchronization, for data fetch, for data update and for IO as well as interrupts. Memory access request packets serve to request data from a shared memory and comprise a header with the destination address of a target memory and the requested memory operation. As no data is transported, the payload will be empty. The cache coherence synchronization packet is sent from an updated memory to all caches with a copy thereof. This packet may comprise data as payload if the data in the caches are to be updated or may comprise no data if the data in the caches are to be invalidated, wherein the header may comprise the particular operation type. The data fetch packet serves as a reply packet from a memory and contains the requested data as payload while the header contains the target address. The data update packet serve to write data back into a memory and contains the target address in the header and the respective data as the payload. The IO and the interrupt packet contains a header with the destination address and if a data exchange is involved the payload may contain the data. Accordingly, the content of the header as well as of the payload will depend on the transaction.

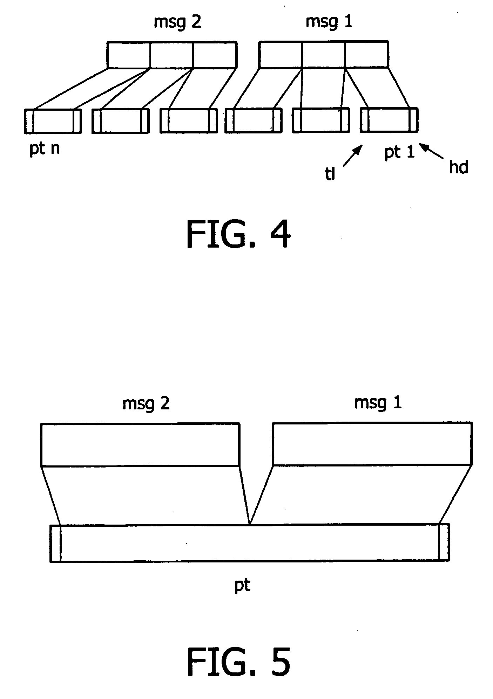

In Fig. 4 it is shown that messages are divided into packets such that each message is separated into several packets. Here, a first and second message, msg1 msg2 are shown which are divided into several packets, pt 1 - pt n. Each packet may contain a header hd, a payload and a tail tl. As shown in Fig. 5, multiple complete messages msg are included into one single packet pt.

Here, multiple messages may be contained in the payload of a packet if the payload is sufficiently large. In addition, the messages are aligned with the size of the payload of packet.

It is an object in the invention to improve the resource utilization of a system-on-chip environment.

This object is achieved by an integrated circuit according to claim 1, a data processing circuit comprising such an integrated circuit, and a method for packet switching control according to claim 3.

Accordingly, by reducing the amount of unused words not only the overhead like the header and tail of the data packets are reduced but also the utilization of the interconnect is improved and the latency thereof is reduced. This becomes especially important for a communication with a lot of smaller messages.

According to an aspect of the invention, at least one network interface associated to said first of said plurality of processing modules is provided for controlling the communication between said first of said plurality of processing modules and said interconnect means. Each of said at least one packet inspecting units is arranged in one of said network interfaces. By introducing the packet inspecting units into the network interfaces, the processing modules do not have to deal with the actual communication to and over the interconnect such that the processing modules merely have to perform their dedicated processing.

These and other aspects of the invention are apparent from and will be elucidated with reference to the embodiment(s) described hereinafter.
Fig. 1 shows a basic block diagram of a network on chip according to the invention,
Fig. 2 shows the basic structure of the packetization of two messages,
Fig. 3 shows the basic structure of the packetization of two messages according to the invention, and
Fig. 4 and 5 show the basic structure of a packetization of two messages according to the prior art.

The following embodiments relate to systems on chip, i.e. a plurality of modules on a single chip or on multiple chips communicate with each other via some kind of interconnect. The interconnect is embodied as a network on chip NoC. The network on chip may include wires, bus, time-division multiplexing, switch, and/or routers within a network. At the transport layer of said network, the communication between the modules are performed over connections. A connection is considered as a set of channels, each having a set of connection properties, between a first module and at least one second module. For a connection between a first module and a single second module, the connection comprises two channel, namely one from the first module to the second channel, i.e. the request channel, and a second from the second to the first module, i.e. the response channel. The request channel is reserved for data and messages from the first to the second, while the response channel is reserved for data and messages from the second to the first module. However, if the connection involves one first and N second modules, 2*N channels are provided.

The modules as described the following can be so-called intellectual property blocks IPs (computation elements, memories or a subsystem which may internally contain interconnect modules) that interact with network at a network interfaces NI. A network interface NI can be connected to one or more IP blocks. Similarly, an IP can be connected to more than one network interfaces.

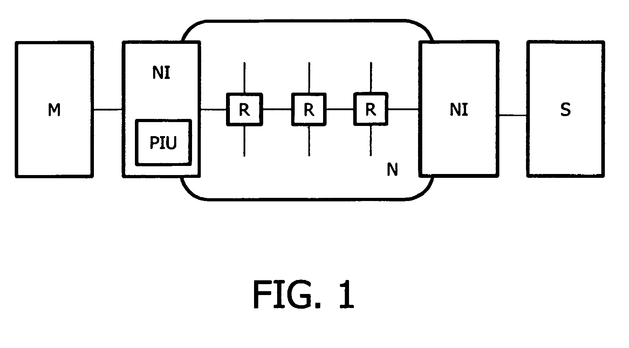

Fig. 1 shows a basic block diagram of a network on chip according to a first embodiment. In particular, a master module M and a slave module S each with an associated network interface NI are depicted. Each module M, S is connected to a network N via its associated network interface NI, respectively. The network interfaces NI are used as interfaces between the master and slave modules M, S and the network N. The network interfaces NI are provided to manage the communication between the respective modules M, S and the network N, so that the modules can perform their dedicated operation without having to deal with the communication with the network or other modules. The network comprises a plurality of interconnected routers R. The routers R serve to forward commands and data to the next router R or to a network interface NI. For more details on the router architecture please refer to Rijpkema et al, "A Router Architecture for Networks on Silicon", Proceedings of Process 2001, 2nd Workshop on Embedded Systems, or "Trade Offs in the Design of a Router with Both Guaranteed and Best-Effort Services For Networks on Chip", by Rijpkema et al in Design, Automation and Test in Europe Conference and Exhibition (DATE'03) March 03 - 07, 2003 Munich, Germany.

As the bandwidth of the network in the network-on-chips is usually fixed for all types of transactions and communications between the master and slave modules M, S, in certain cases some of the words or bits in a packet may not be required for the communication or a transaction. One example can be a memory access request as described above, since the payload of such a packet is empty. An alternative example of unused bits or bits not required can be if a target or slave has an address range which needs less address bits as allocated in the header of the packet. The same may be applicable for the data in the payload.

Therefore, a packet inspecting unit PIU is arranged in the network interface NI associated to the master module M. The packet inspecting unit PIU serves to control the packet switching for packets sent from the master module M.

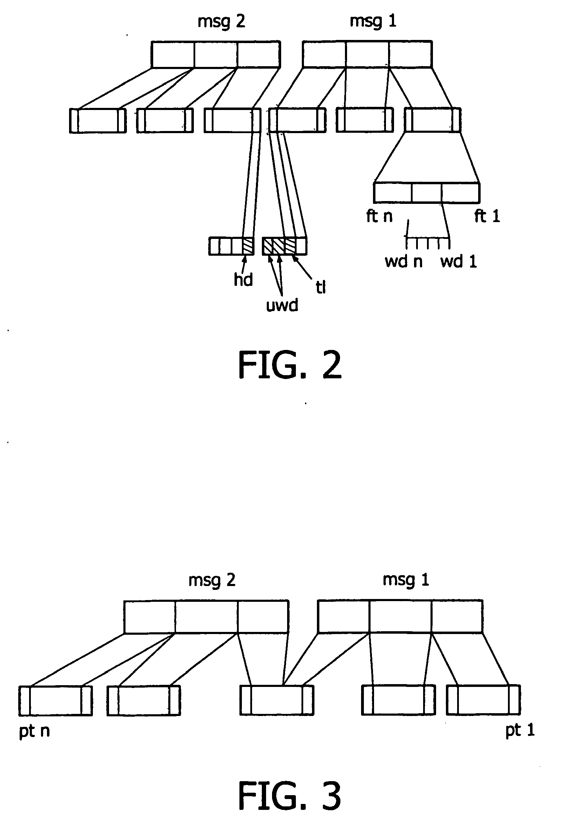

Fig. 2 shows the basic structure of the packetization of two messages. The two messages msg1, msg2 are each divided into three parts. Each of these parts are associated to a packet, such that six packets pt1 - pt6 are necessary to transfer the two messages over the interconnect. Each of the packets pt1 - pt6 contain a header hd and a tail tl. However, using the packetization technique introduces an additional overhead. In particular, two types of overheads are present. First of all, as mentioned above, an additional header and a tail have to be transmitted. Furthermore, unused words may occur when the size of the last packet does not match a multiple of the flits (flow control unit). Flits constitute the minimum amount of data portions to be transmitted. Packets may consist of multiple flits (either fixed or flexible). Due to these overheads, the amount of network traffic is increased such that the latency of the communication channel is also increased. Hence, the second message msg2 arrives late. However, this increased amount of network traffic will also effect other communication channels in the interconnect. Moreover, information about the message boundaries are required for performing the packetization technique. This in turn complicates the design of any network interface.

Fig. 3 shows the basic structure of the packetization of messages according to the invention. As mentioned with regard to Fig. 2, the packet inspecting unit PIU divides the two messages msg1, msg2 each into several packets each containing a header hd and a tail tl. However, if the payload of a packet contains some unused words, here a third packet pt3, the unused space in the payload is determined by the packet inspecting unit PIU and is used for data from the next message msg2. Accordingly, the third packet pt3 will contain data From the first as well as the second message msg1, msg2. In other words, the first and second packet pt1, pt2 will contain only data from the first message msg1, the fourth and fifth packet pt4, pt5 will contain data only from the second message msg2, and the third packet pt3 will contain data from both messages msg1, msg2. In other words, parts of multiple messages may be present in one packet.

Accordingly, if the basic structure of Fig. 3 is compared to the basic structure of Fig. 2, it should be noted that according to Fig. 3 only five packets are required while according to Fig. 2 six packets are required. Therefore, not only the amount of unused words are reduced but also the overhead, i.e. the header hd and the tail t1, is reduced such that the utilization of the interconnect is improved and the latency thereof is reduced. This may be especially advantageous in network-on chip as a lot of smaller messages like WRITE and READ based on a single word may be present. In addition, the design of a network interfaces NI may become more re-usable and simpler.

Although in the above embodiment the principles of the invention are described with regard to network-on chips, the principles may also be applied to a system on chip with a bus-based interconnect.

While according to the prior art as shown in Fig. 5 multiple complete messages are included into a single packet, according to the invention at least one message is merely partially included in the packet and the packet consists of multiple messages.

Although according to Fig. 3 parts of two messages are included into a packet, the principles of the invention are not limited to such a situation. In particular, one packet may include one part of a message or a full message, followed by N full messages followed by one part of a message or a full message.

By performing the packetization of messages on a non-alignment basis, network-on-chips can be implemented on a low-cost, low-latency basis.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

## Claims

1. Integrated circuit having
a plurality of processing modules (M, S),
an interconnect means (N) for coupling said plurality of processing modules (M, S) and for enabling a packet based communication based on transactions between said plurality of processing modules (M, S), each packet comprising a number of subsequent words, a first one (M) of said plurality of processing modules adapted to issue a transaction by sending a plurality of messages (msg1, msg2) over said interconnect means (N) to a second of said plurality of processing modules (S),
a network interface (NI) associated to said first one (M) of said plurality of processing modules (M) for controlling the communication between said first one (M) of said plurality of processing modules and said interconnect means (N), and
a packet inspecting unit (PIU) arranged in said network interface (NI) for packetizing said plurality of messages (msg1, msg2) into a plurality of packets,
**characterized in that** said packet inspecting unit (PIU) is arranged for inspecting said packets to determine unused space in said packets, and arranged for using said unused space for data from at least one subsequent message (msg1, msg2) of said plurality of messages to reduce an amount of unused words.

2. Data processing system comprising an integrated circuit according to claim 1.

3. Method for packet switching control in an integrated circuit having a plurality of processing modules (M, S) and an interconnect means (N) for coupling said plurality of processing modules (M, S) and for enabling a packet based communication based on transactions between said plurality of processing modules (M, S), each packet comprising a number of subsequent words, a first one (M) of said plurality of processing modules issuing a transaction by sending a plurality of messages (msg1, msg2) over said interconnect means (N) to a second of said plurality of processing modules (S), the method comprising the steps of:
packetizing said plurality of messages (msg1, msg2) into a plurality of packets (pt1 - pt6), **characterized by**
inspecting said packets to determine unused space in said packets, and using the unused space in said plurality of packets for data from at least one subsequent message of said plurality of messages (msg1, msg2) to reduce an amount of unused words.

## Patentansprüche

1. Integrierte Schaltung, die Folgendes umfasst:
- eine Anzahl Verarbeitungsmodule (M, S),
- ein Verbindungsmittel (N) zur Kopplung der genannten Verarbeitungsmodule (M, S) miteinander und zur Ermöglichung einer paketbasierten Kommunikation auf Basis von Transaktionen zwischen den genannten Verarbeitungsmodulen (M, S), wobei jedes Paket eine Anzahl aufeinander folgender Wörter aufweist, wobei ein erstes Modul (M) der genannten Verarbeitungsmodule dazu vorgesehen ist, eine Transaktion durchzuführen, indem eine Anzahl Nachrichten (msg1, msg2) über die genannten Verbindungsmittel (N) einem zweiten Modul der genannten Verarbeitungsmodule (S) zugeführt wird,
- eine Netzwerkschnittstelle (NI), die mit dem genannten ersten Modul (M) der genannten Verarbeitungsmodule (M) assoziiert ist, zur Steuerung der Kommunikation zwischen dem genannten ersten Modul (M) der genannten Verarbeitungsmodule und dem genannten Verbindungsmittel (N), und
- eine Paketinspektionseinheit (PIU), die in der genannten Netzwerkschnittstelle (NI) zur Paketierung der genannten Nachrichten (msg1, msg2) zu einer Anzahl Pakete vorgesehen ist,
**dadurch gekennzeichnet, dass** die genannte Paketinspektionseinheit (PIU) zur Inspektion der genannten Pakete vorgesehen ist, um nicht benutzten Raum in den genannten Paketen zu ermitteln, und zur Verwendung des nicht benutzten Raums für Daten von wenigstens einer nachfolgenden Nachricht (msg1, msg2) der genannten Nachrichten vorgesehen ist zur Reduktion einer Anzahl nicht benutzter Wörter.

2. Datenverarbeitungssystem mit einer integrierten Schaltung nach Anspruch 1.

3. Verfahren zur Paketvermittlungssteuerung in einer integrierten Schaltung mit einer Anzahl Verarbeitungsmodule (M, S) und einem Verbindungsmittel (N) zur Kopplung der genannten Verarbeitungsmodule (M, S) miteinander und zur Ermöglichung einer paketbasierten Kommunikation auf Basis von Transaktionen zwischen den genannten Verarbeitungsmodulen (M, S), wobei jedes Paket eine Anzahl aufeinander folgender Wörter aufweist, wobei ein erstes Modul (M) der genannten Verarbeitungsmodule dazu vorgesehen ist, eine Transaktion durchzuführen, indem eine Anzahl Nachrichten (msg1, msg2) über die genannten Verbindungsmittel (N) einem zweiten Modul der genannten Verarbeitungsmodule (S) zugeführt wird, wobei das Verfahren die nachfolgenden Verfahrensschritte umfasst:
- das Paketieren der genannten Nachrichten (msg1, msg2) zu einer Anzahl Pakete (pt1 - pt6), **gekennzeichnet durch**
- Inspektion der genannten Pakete zur Ermittlung nicht benutzten Raums in den genannten Paketen, und
- Benutzung nicht benutzten Raums in den genannten Paketen für Daten von wenigstens einer nachfolgenden Nachricht der genannten Nachrichten (nsg1, msg2) zur Reduktion einer Anzahl nicht benutzter Wörter.

## Revendications

1. Circuit intégré ayant
une pluralité de modules de traitement (M, S),
un moyen d'interconnexion (N) pour coupler ladite pluralité de modules de traitement (M, S) et pour permettre une communication basée sur paquets sur la base de transactions entre ladite pluralité de modules de traitement (M, S), chaque paquet comprenant un nombre de mots subséquents, un premier (M) de ladite pluralité de modules de traitement étant apte à émettre une transaction en envoyant une pluralité de messages (msg1, msg2) sur ledit moyen d'interconnexion (N) à un deuxième de ladite pluralité de modules de traitement (S),
une interface de réseau (NI) associée au dit premier (M) de ladite pluralité de modules de traitement (M) pour commander la communication entre ledit premier (M) de ladite pluralité de modules de traitement et ledit moyen d'interconnexion (N), et
une unité d'inspection de paquets (PIU) agencée dans ladite interface de réseau (NI) pour paqueter ladite pluralité de messages (msg1, msg2) en une pluralité de paquets,
**caractérisé en ce que** ladite unité d'inspection de paquets (PIU) est agencée pour inspecter lesdits paquets pour déterminer l'espace inutilisé dans lesdits paquets, et agencée pour utiliser ledit espace inutilisé pour des données provenant d'au moins un message subséquent de ladite pluralité de messages (msg1, msg2), pour réduire une quantité de mots inutilisés.

2. Système de traitement de données comprenant un circuit intégré selon la revendication 1.

3. Procédé de commande de commutation par paquets dans un circuit intégré ayant une pluralité de modules de traitement (M, S) et un moyen d'interconnexion (N) pour coupler ladite pluralité de modules de traitement (M, S) et pour permettre une communication basée sur paquets sur la base de transactions entre ladite pluralité de modules de traitement (M, S), chaque paquet comprenant un nombre de mots subséquents, un premier (M) de ladite pluralité de modules de traitement émettant une transaction en envoyant une pluralité de messages (msg1, msg2) sur ledit moyen d'interconnexion (N) à un deuxième de ladite pluralité de modules de traitement (S), le procédé comprenant les étapes consistant à :
paqueter ladite pluralité de messages (msg1, msg2) en une pluralité de paquets (pt1 - pt6), **caractérisé par**
inspecter lesdits paquets pour déterminer l'espace inutilisé dans lesdits paquets, et utiliser l'espace inutilisé dans ladite pluralité de paquets pour des données provenant d'au moins un message subséquent de ladite pluralité de messages (msg1, msg2) pour réduire une quantité de mots inutilisés.
